# EUROPÄISCHE PATENTSCHRIFT

(11) **EP 0 984 401 B1**
(45) Veröffentlichungstag und Bekanntmachung des Hinweises auf die Patenterteilung: **16.06.2004**
(21) Anmeldenummer: 99117006.9
(22) Anmeldetag: 28.08.1999
(51) Int. Cl.: G07C 7/00, G07B 13/00

(54) **Anordnung zur Dämpfung der Schwenkbewegung des Diagrammscheibenträgers eines Fahrtschreibers beim Verbringen in eine Einlege-/Entnahmeposition**
Device for damping the swivelling movement of the tachograph diagram disc carrier during staying in an input/output position
Dispositif pour amortir le mouvement pivotant du support de disque à diagramme d'un tachygraphe pendant son déplacement dans une position entrée/sortie

(30) Priorität: 03.09.1998 DE 19840062
(43) Veröffentlichungstag der Anmeldung: 08.03.2000
(73) Patentinhaber: SIEMENS AKTIENGESELLSCHAFT, 80333 München (DE)
(72) Erfinder: Säger, Benjamin, 78050 Villingen-Schwenningen (DE); Höni, Helmut, 78733 Aichhalden (DE)

(56) Entgegenhaltungen:
- EP-A- 0 652 129
- EP-A- 0 819 865
- WO-A-98/10380
- DE-A- 19 545 354
- DE-A- 19 804 647
- US-A- 4 862 445

## Beschreibung

Die Erfindung betrifft einen Fahrtschreiber mit einer Anordnung zur Dämpfung der Schwenkbewegung des Diagrammscheibenträgers beim Verbringen in eine Einlege-/Entnahmeposition, wobei der Fahrtschreiber ein quaderförmiges Gehäuse aufweist und der Diagrammscheibenträger zwischen einer Registrierposition innerhalb des Gehäuses, in welcher der Diagrammscheibenträger spielfrei verriegelt ist und der von außen zugänglichen Einlege-/Entnahmeposition, in welcher der Diagrammscheibenträger an einem Anschlag anliegt, bewegbar ist, derart, dass der Diagrammscheibenträger zwischen der Registrierposition und einer Gelenkposition geräteintern verschiebbar und in der Gelenkposition um eine dem Diagrammscheibenträger zugeordnete Achse verschwenkbar ist.

Aus der nachveröffentlichten DE 198 04 647.2 A1 sowie aus der EP 0 652 129 A1 ist ein derartiger Fahrtschreiber bekannt.

Ziel der oben genannten Patentanmeldung war es, einen Fahrtschreiber der gattungsmäßigen Art so umzugestalten, dass durch eine Verbesserung der Handhabung der Diagrammscheiben die Einbaumöglichkeiten in einem größeren Umfange genutzt werden können.

Die in der DE 198 04 647.2 A1 vorgeschlagene Lösung, bei der dem Diagrammscheibenträger eine Achse zugeordnet ist, um die er in einer Gelenkposition verschwenkt werden kann, löst die gestellte Aufgabe, indem sie eine erheblich größere Freiheit bezüglich des Einbaus des Fahrtschreibers in einer Fahrzeugkabine bietet. Andererseits ergibt sich bei der in der Hauptpatentanmeldung dargestellten Lösung beim Wechseln bzw. bei einer Kontrolle der Diagrammscheiben eine ungewohnte aber auch unübliche Handhabung des Diagrammscheibenträgers dadurch, dass eine kombinierte Bewegung des Diagrammscheibenträgers zwischen der Registrierposition und der Einlege-/Entnahmeposition erforderlich ist, d. h., dass bei der Handhabung des Diagrammscheibenträgers vielfach nicht beachtet wird, dass der Diagrammscheibenträger, nachdem er geradlinig aus dem Gehäuse des Fahrtschreibers herausgezogen worden ist, in der Gelenkposition unter der Einwirkung der Schwerkraft selbsttätig in die Einlege-/Entnahmeposition schwenkt und unkontrolliert an dem vorgesehenen Anschlag auftreffen kann, was zwangsläufig Beschädigungen der Anschlag- und Gelenkmittel zur Folge hat.

Das geschilderte Problem ist insbesondere auch deshalb gegeben, weil eine Schwergängigkeit des Diagrammscheibenträgers in der Gelenkposition deshalb nicht realisiert werden kann, weil für das Verschieben des Diagrammscheibenträgers innerhalb des Gehäuses ein Leichtlauf gewährleistet sein muss. Beispielsweise sieht das bevorzugte Ausführungsbeispiel der Hauptpatentanmeldung hierzu eine im Diagrammscheibenträger gelagerte Welle vor, welche zur Erreichung einer kippfreien Führung des Diagrammscheibenträgers mittels Ritzel mit verzahnten Führungsschienen in Eingriff steht, die dem Gehäuse zugeordnet sind.

Demzufolge ist es bei einem Fahrtschreiber erforderlich, Dämpfungsmittel vorzusehen, die während des Verschwenkens des ansonsten leichtlaufend gelagerten Diagrammscheibenträgers wirksam werden.

Der vorliegenden Erfindung lag somit die Aufgabe zugrunde, eine solche Anordnung zur Dämpfung des Diagrammscheibenträgers zu schaffen, die mit einfachen Mitteln realisiert werden kann, die für eine Serienmontage geeignet ist und eine hohe Funktionssicherheit bietet.

Gelöst wird die gestellte Aufgabe durch die im Anspruch 1 aufgeführten Maßnahmen. Als bevorzugtes Ausführungsbeispiel ist vorgesehen, dass als Kraftspeicher wenigstens eine Schenkelfeder vorgesehen wird, dass die Schenkelfeder auf der Welle des Diagrammscheibenträgers gelagert und mit einem Schenkel in dem Diagrammscheibenträger gehaltert ist, und dass ein in der Gelenkposition des Diagrammscheibenträgers ortsfester Arm vorgesehen ist, welcher in den Bewegungsweg des anderen Schenkels eingreift.

Die gefundene Lösung gewährleistet, daß die Dämpfung beim Verschieben des Diagrammscheibenträgers innerhalb des Gehäuses außer Funktion ist und erst beim Verschwenken des Diagrammscheibenträgers wirksam wird, indem in einfacher Weise jeweils ein Schenkel der Schenkelfedern in Wirkverbindung mit einem dem jeweiligen Schenkel zugeordneten Fangarm kommt. Die Handhabung des Diagrammscheibenträgers wird dadurch weitgehend vereinfacht, d. h., sie erfordert weniger Sorgfalt, mit anderen Worten, der Diagrammscheibenträger kann beim Erreichen der Gelenkposition letzten Endes auch fallen gelassen werden. Ferner ist bei der vorgesehenen Dämpfungsanordnung, insbesondere bei der Lösung gemäß des bevorzugten Ausführungsbeispiels von Vorteil, daß sie mit einem sehr geringen zusätzlichen Bauteileaufwand realisierbar ist und in Form der Schenkelfedern einfache, leicht montierbare Bauteile Anwendung finden. Die den Dämpfungsmitteln zugeordnete Druckpunkt- bzw. Rastmechanik dient, indem sie eine Haftung des Diagrammscheibenträgers an dem die Einlege-/Entnahmeposition bestimmenden Anschlag bewirkt, in vorteilhafter Weise der Vermeidung des Zurückfederns des in der Offenstellung an dem Anschlag anliegenden, jedoch unter der Wirkung der Dämpfung bzw. des/der gespannten Kraftspeichers stehenden Diagrammscheibenträgers.

Im folgenden sei die Erfindung anhand der beigefügten Zeichnungen näher erläutert. Es zeigen:
- **Figur 1**: eine verkleinerte Darstellung einer Frontansicht eines mit der erfindungsmäßigen Dämpfungsanordnung ausgerüsteten Fahrtschreibers,
- **Figur 2**: eine Teildarstellung der Seitenansicht eines Fahrtschreibers gemäß Figur 1, mit in der Einlege-/Entnahmeposition befindlichem Diagrammscheibenträger,
- **Figur 3**: eine vergrößerte, perspektivische Darstellung der Dämpfungsanordnung bei verschwenktem Diagrammscheibenträger,
- **Figur 4**: eine vergrößerte Seitenansicht gemäß Figur 2 mit einem Teilschnitt im Bereich einer Schenkelfeder,
- **Figur 5**: eine Seitenansicht gemäß Figur 4 mit einer Teildarstellung des Diagrammscheibenträgers in einer Lage, die bezogen auf das Gehäuse dem Einschieben/Herausziehen entspricht.

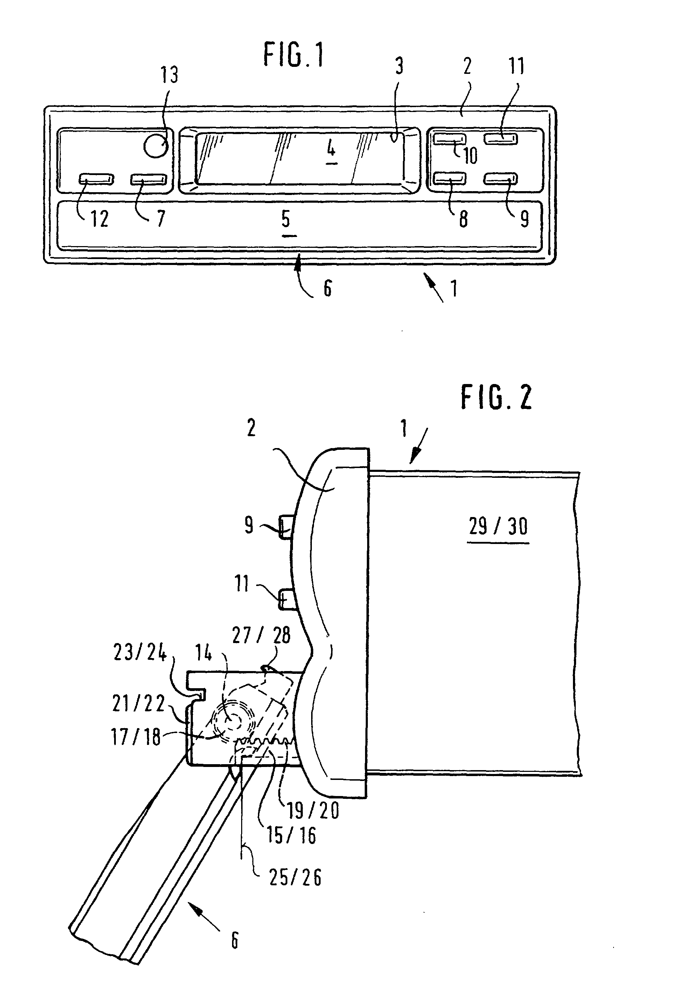

Die Figuren 1 und 2 dienen .als Übersichtsdarstellungen bezüglich des gattungsgemäßen Fahrtschreibers. Dabei ist in Figur 1 mit 1 das quaderförmige Gehäuse bezeichnet, an dessen Frontwand 2 ein Fensterausschnitt 3 für ein der Frontwand 2 zugeordnetes Display 4 ausgebildet ist. 5 stellt die frontseitige Blende eines in dem Gehäuse 1 geführten Diagrammscheibenträgers 6 dar. Von in der Frontwand 2 gelagerten Tasten 7, 8, 9, 10, 11 und 12 sind die Tasten 7 und 8 sowie die als Menütaste bezeichnete Taste 9 dem Fahrer beziehungsweise dem Beifahrer zum Anwählen wenigstens der wichtigsten Arbeitszeitdaten zugeordnet. Die Tasten 10 und 11 dienen dem Vor- und Rückwärtsblättern in den jeweils angewählten Datensätzen, die Taste 12 ist für das Entriegeln und Freigeben des Diagrammscheibenträgers 6 vorgesehen. Mittels einer mit 13 bezeichneten Plombe ist der Zugang zu einer Diagnosebuchse gesichert.

Wie aus der Figur 2 hervorgeht, ist der Diagrammscheibenträger 6 in der Einlege-/Entnahmeposition gegenüber der Führungsebene innerhalb des Fahrtschreibers um einen bestimmten Winkel, der in möglichst vielen Einbaulagen eine zufriedenstellende Handhabung der nicht dargestellten Diagrammscheiben gestattet, verschwenkt. Das heißt, eine Welle 14, auf der der Diagrammscheibenträger 6 drehbar gelagert ist, befindet sich in einer stabilen Gelenkposition außerhalb des Gehäuses 1, wobei die Gelenkposition durch im Gehäuse 1 verschiebbar gelagerte und in der Gelenkposition. verriegelte Gelenkschienen 15, 16 vorgegeben ist. Wie aus der Figur 2 ferner ersichtlich ist, sind auf der Welle 14 beidseitig Ritzel 17, 18 befestigt und diesen in den Gelenkschienen 15, 16 ausgebildete Verzahnungen 19, 20 zugeordnet, womit eine hohe Führungsqualität, insbesondere ein verkantungsfreies Führen des Diagrammscheibenträgers 6 innerhalb des Fahrtschreibers erzielt wird. Der stirnseitige Abschluß der Gelenkschiene 15, 16 wird jeweils von einem Anschlagelement 21, 22 gebildet, das nach dem Einsetzen des Diagrammscheibenträgers 6 zwischen die Gelenkschienen 15, 16 an letzteren unter Verwendung von Rastmitteln befestigt wird und an dem die Ritzel 17, 18 in der Gelenkposition des Diagrammscheibenträgers 6 anliegen. In den Gelenkschienen 15, 16 ausgebildete Nute 23, 24 sind Teil von Steg-/Schlitzverbindungen zur Schaffung einer spielfreien Verbindung zwischen den Gelenkschienen 15, 16 und dem Diagrammscheibenträger 6. Mit 25, 26 und mit 27, 28 sind dem Diagrammscheibenträger 6 zugeordnete Freisparungen und Hebel bezeichnet, die mit an den Gelenkschienen 15, 16 ausgebildeten Konturen zusammenwirken und auf diese Weise den die Einlege-/Entnahmeposition des Diagrammscheibenträgers 6 bestimmenden Anschlag bilden. Die Seitenwände des Gehäuses 1 sind mit 29, 30 bezeichnet.

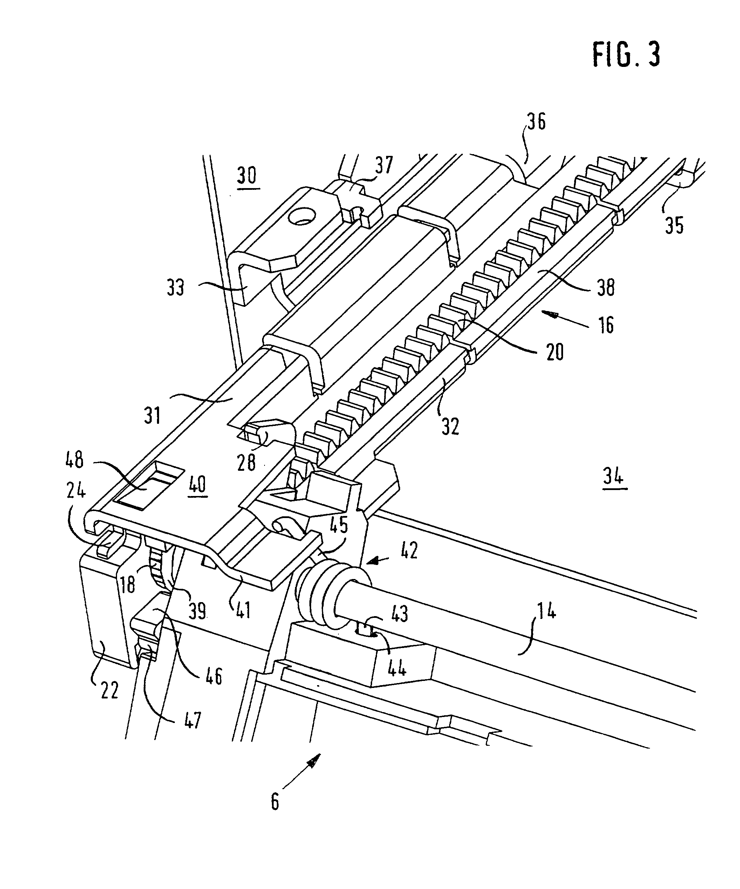

Die Figur 3, bei der der Übersichtlichkeit halber die Frontwand 2 nicht dargestellt ist, zeigt eine Seite der dem Diagrammscheibenträger 6 beidseitig zugeordneten Führungs- und Dämpfungsmittel. Die Gelenkschiene 16 stellt ein Verbundteil dar, bestehend aus einem metallischen Träger 31 und einem vorzugsweise segmentierten Kunststoffkörper 32, dessen Herstellung beispielsweise in Outsert-Spritzgießtechnik erfolgt. Als Lager für die Gelenkschiene 16 ist eine als Blech-Biegeteil ausgebildete Führungsschiene 33 vorgesehen, welche mit der Seitenwand 30 - gegebenenfalls auch mit dem Boden 34 - fest verbunden ist und eine Führungsrinne 35 sowie mehrere die Gelenkschiene 16 zur seitlichen Führung umgreifende Halter 36 aufweist. Ein mit 37 bezeichneter, an der Führungsschiene 33 angeformter Arm ist einer Zugfeder zugeordnet, welche entsprechend der in der Häuptpatentanmeldung beschriebenen Führungs- und Verriegelungsmechanik der Gelenkschiene 16 in die Gelenkposition bewegt. Der Vollständigkeit halber sei noch erwähnt, daß parallel an der Verzahnung 20 ein Sims 38 ausgebildet ist, welcher als Auflagefläche für einen an dem Ritzel 18 angeformten Laufbund 39 dient. Wie ferner der Figur 3 entnommen werden kann, ist an der Gelenkschiene 16 ein Fangarm 40 angeformt, der dem Hebel 28 in der Einlege-/Entnahmeposition als Anschlag dient.

Die eigentliche Dämpfungsanordnung sieht in der erfindungsgemäßen einfachen Weise lediglich einen an dem Fangarm 40 ausgebildeten Ansatz 41 und eine auf der Welle 14 gelagerte Schenkelfeder 42 vor, deren einer Schenkel 43 in einer im Diagrammscheibenträger 6 ausgebildeten Öffnung 44 gehaltert ist und deren anderer Schenkel 45, während des Verschwenkens des Diagrammscheibenträgers 6, mit dem am Fangarm 40 ausgebildeten Ansatz 41 in Wirkverbindung tritt. Mit 46 ist ein mit einem Wulst 47 versehener Rastkörper bezeichnet, der jeweils an den Anschlagelementen 21, 22 in bezogen auf die Welle 14 axialer Richtung angeformt ist, und zwar derart, daß er in gewisser Weise elastisch verformbar ist. Von den dem Anschlagelement 22 zugeordneten Befestigungsriegeln ist in Figur 3 einer sichtbar und mit 48 bezeichnet.

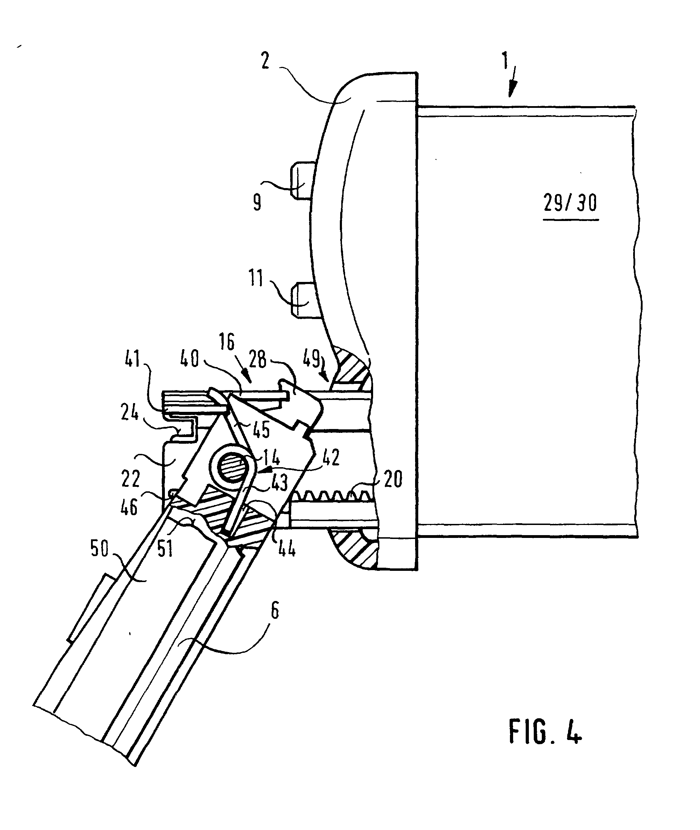

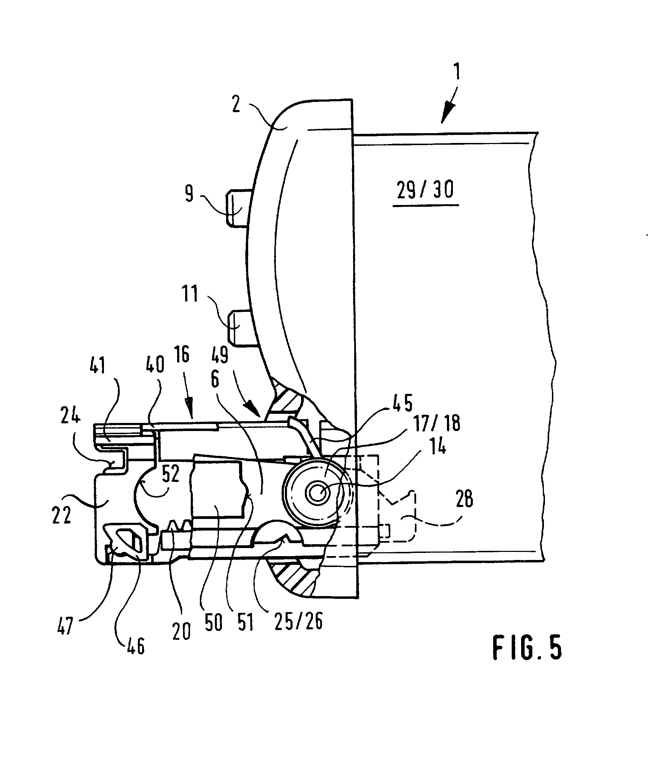

Mit den Figuren 4 und 5 soll die zeichnerische Darstellung insbesondere der Figur 3 ergänzt werden. Sie zeigen, daß in der mit dem Gehäuse 1 verbundenen Frontwand 2 eine Öffnung 49 vorgesehen ist, die ein Heraustreten der Gelenkschienen 15, 16 und ein Herausziehen des Diagrammscheibenträgers 2 ermöglicht und die mittels der Blende 5 abgedeckt wird. Ferner zeigen die Figuren 4 und 5, daß seitlich am Diagrammscheibenträger 6 Führungsleisten 50 angeformt sind, an welchen stirnseitig den Wülsten 47 zugeordnete Kuppen 51 ausgebildet sind. Alternativ kann die vorgesehene Rastmechanik auch derart ausgebildet sein, daß den Wülsten 47 Vertiefungen zugeordnet sind. Mit 52 ist eine an den Anschlagelementen 21, 22 ausgebildete schalenförmige Ausnehmung bezeichnet, die dem jeweiligen Ritzel 17 bzw. 18 eine Anschlagfläche bietet.

Der Vollständigkeit halber sei noch erwähnt, daß die Schenkelfedern 42 in der Registrierposition des Diagrammscheibenträgers 6 entspannt sind und somit einer Materialermüdung weitgehend vorgebeugt ist. Ferner sei erwähnt, daß das Wirksamwerden der Dämpfungsanordnung während der Schwenkbewegung des Diagrammscheibenträgers 6 mittels des Öffnungswinkels zwischen den Schenkeln 43 und 45 festlegbar ist. Außerdem läßt sich das Dämpfungsverhalten in einem relativ weiten Bereich mit der Wahl der Federeigenschaften bestimmen.

## Patentansprüche

1. Fahrtschreiber mit einer Anordnung zur Dämpfung der Schwenkbewegung eines Diagrammscheibenträgers beim Verbringen in eine Einlege-/Entnahmeposition, wobei der Fahrtschreiber ein quaderförmiges Gehäuse aufweist und der Diagrammscheibenträger zwischen zwei Registrierpositionen innerhalb des Gehäuses, in welchem der Diagrammscheibenträger spielfrei verriegelt ist und der von außen zugänglichen Einlege-/Entnahmeposition, in welcher der Diagrammscheibenträger an einem Anschlag anliegt, bewegbar ist derart, dass der Diagrammscheibenträger zwischen der Registrierposition und einer Gelenkposition geräteintern verschiebbar und in der Gelenkposition um eine dem Diagrammscheibenträger zugeordnete Achse verschwenkbar ist,
**dadurch gekennzeichnet, dass**
als Anordnung zur Dämpfung ein Kraftspeicher vorgesehen ist, dass der Kraftspeicher mit dem Diagrammscheibenträger verbunden ist, und dass dem Kraftspeicher in der Gelenkposition ein ortsfester Anschlag zugeordnet ist.

2. Fahrtschreiber nach Anspruch 1,
**dadurch gekennzeichnet, dass**
als Kraftspeicher wenigstens eine Schenkelfeder (42) auf der Achse (14) gelagert und mit einem Schenkel (43) in dem Diagrammscheibenträger (6) gehaltert ist, und dass ein in der Gelenkposition des Diagrammscheibenträgers (6) als ortsfester Anschlag dienender Fangarm (40) vorgesehen ist, welcher in den Bewegungsweg des anderen Schenkels (45) der Schenkelfeder (42) eingreift.

3. Fahrtschreiber nach Anspruch 2,
**dadurch gekennzeichnet, dass**
zwei Schenkelfedern (42) vorgesehen sind und
dass die den Schenkelfedern (42) zugeordneten Fangarme (40) jeweils an in gehäusefest angeordneten Führungsschienen (33) verschiebbar gelagerten Gelenkschienen (15, 16) angeformt sind.

4. Fahrtschreiber nach Anspruch 1,
**dadurch gekennzeichnet, dass**
an dem Diagrammscheibenträger (6) Rastelemente (51) angeformt sind und
dass den Gelenkschienen (16, 16) Rastelemente (46) derart zugeordnet sind, dass in der Einlege-/Entnahmeposition des Diagrammscheibenträgers (6) die Rastelemente des Diagrammscheibenträgers (6) und der Gelenkschienen (15, 16) in Wirkverbindung stehen.

## Claims

1. Tachograph with an arrangement for damping the pivoting movement of a record chart carrier during introduction into an insertion/extraction position, the tachograph having a parallelepipedal housing, and the record chart carrier being capable of being moved between two recording positions within the housing, in which the record chart carrier is locked, free of play, and the insertion/extraction position accessible from outside, in which the record chart carrier bears against a stop, in such a way that the record chart carrier can be displaced, within the appliance, between the recording position and an articulation position and in the articulation position can be pivoted about a shaft assigned to the record chart carrier, **characterized in that** a force accumulator is provided as an arrangement for damping, **in that** the force accumulator is connected to the record chart carrier, and **in that**, in the articulation position, the force accumulator is assigned a fixed stop.

2. Tachograph according to Claim 1, **characterized in that**, as force accumulator, at least one leg spring (42) is mounted on the shaft (14) and is held in the record chart carrier (6) by means of one leg (43), and **in that** a catch arm (40) is provided, which serves as a fixed stop in the articulation position of the record chart carrier (6) and which engages into the path of movement of the other leg (45) of the leg spring (42).

3. Tachograph according to Claim 2, **characterized in that** two leg springs (42) are provided, and **in that** the catch arms (40) assigned to the leg springs (42) are integrally formed in each case on articulation rails (15, 16) mounted displaceably in guide rails (33) arranged fixedly with respect to the housing.

4. Tachograph according to Claim 1, **characterized in that** latching elements (51) are integrally formed on the record chart carrier (6), and **in that** the articulation rails (15, 16) are assigned latching elements (46) in such a way that, in the insertion/extraction position of the record chart carrier (6), the latching elements of the record chart carrier (6) and of the articulation rails (15, 16) are operatively connected.

## Revendications

1. Tachygraphe comportant un dispositif destiné à amortir le mouvement de basculement d'un support de disque à diagramme lorsqu'on le met dans une position entrée/sortie, le tachygraphe ayant un boîtier parallélépipédique et le support de disque à diagramme pouvant être déplacé entre deux positions d'enregistrement à l'intérieur du boîtier, dans lequel le support de disque à diagramme est verrouillé sans avoir de jeu et la position entrée/sortie accessible de l'extérieur, dans laquelle le support de disque à diagramme s'applique contre une butée, de telle manière que le support de disque à diagramme peut être déplacé, à l'intérieur de l'appareil, entre la position d'enregistrement et une position à articulation et peut être, dans la position à articulation, basculé autour d'un arbre affecté au support de disque à diagramme,
**caractérisé par le fait**
**qu'**il est prévu, en tant que dispositif d'amortissement, un accumulateur d'énergie, que l'accumulateur d'énergie est lié au support de disque à diagramme et qu'une butée fixe est affectée à l'accumulateur d'énergie dans la position à articulation.

2. Tachygraphe selon la revendication 1,
**caractérisé par le fait**
**que**, en tant qu'accumulateur d'énergie, au moins un ressort à branches (42) est monté sur l'arbre (14) et maintenu par une branche (43) dans le support de disque à diagramme (6) et que, dans la position à articulation du support de disque à diagramme (6), il est prévu un bras de garde (40) servant de butée fixe et intervenant sur le trajet du déplacement de l'autre branche (45) du ressort à branches (42).

3. Tachygraphe selon la revendication 2,
**caractérisé par le fait**
**qu'**il est prévu deux ressorts à branches (42) et que les bras de garde (40) affectés aux ressorts à branches (42) sont adaptés à des barres d'articulation (15, 16) montées de telle sorte qu'elles peuvent glisser sur des barres de guidage (33) montées fixes dans le boîtier.

4. Tachygraphe selon la revendication 1,
**caractérisé par le fait**
**que** des éléments d'arrêt (51) sont adaptés au support de disque à diagramme (6) et
**que** des éléments d'arrêt (46) sont affectés aux barres d'articulation (15, 16) de telle manière que, dans la position entrée/sortie du support de disque à diagramme (6), les éléments d'arrêt du support de disque à diagramme (6) et ceux des barres d'articulation (15, 16) se trouvent en interaction.
